# EUROPEAN PATENT APPLICATION

(11) **EP 2 355 612 A1**
(43) Date of publication of application: **10.08.2011**
(21) Application number: 09830481.9
(22) Date of filing: 30.11.2009
(51) Int. Cl.: H04W 88/02, H04M 1/00, H04W 84/12, H04W 88/04

(54) **COMMUNICATION APPARATUS, MOBILE COMMUNICATION TERMINAL, COMMUNICATION SYSTEM, AND METHOD FOR DISPLAY IN COMMUNICATION APPARATUS**

(30) Priority: 02.12.2008 JP 2008307333
(71) Applicant: NEC Corporation, Minato-ku Tokyo 108-8001 (JP)
(72) Inventor: SHINOHARA, Masahito, Tokyo 108-8001 (JP); KITATANI, Kenichi, Tokyo 108-8001 (JP)
(74) Representative: Glawe, Delfs, Moll
(86) International application number: PCT/JP2009/070435
(87) International publication number: WO 2010/064716

(57) **Abstract**

A communication apparatus, a mobile communication terminal, a communication system, and display method which can confirm communication state on each of wireless communication paths is provided.

A communication apparatus of the present invention relaying at least one mobile communication terminal to perform wireless communication with a base station includes: an electric field intensity detecting means that detects an electric field intensity in the wireless communication between said communication apparatus and said mobile communication terminal; and a receiving means that receives a signal that includes information on an electric field intensity in the wireless communication between said mobile communication terminal and said base station or includes information on an electric field intensity in the communication between mobile communication terminals and information on an electric field intensity in the wireless communication between said mobile communication terminal and the base station.

## Description

### Technical Field

The present invention relates to a communication apparatus which performs wireless communication with a base station via a mobile communication terminal, a mobile communication terminal which can be connected to the Internet, a communication system, and a display method in a communication apparatus.

### Background Art

A system to upload an image photographed by an electronic still camera to a server on the Internet via a mobile communication terminal is disclosed in Japanese Patent Application Laid-Open No. 2001-145181 (patent literature 1).

Further, an electronic still camera having a wireless communication circuit is disclosed in Japanese Patent Application Laid-Open No. 2006-238018 (patent literature 2). Thus, the electronic still camera can display the link intensity of the wireless communication on its display unit.

Moreover, in an electronic still camera which can communicate with a mobile communication terminal, a technology which displays the radio field intensity between the mobile communication terminal and the base station on a display unit in the electronic still camera is disclosed in Japanese Patent Application Laid-Open No. 2001-333323 (patent literature 3).

### [Citation List]

[Patent Literature 1] Japanese Patent Application Laid-Open No. 2001-145181
[Patent Literature 2] Japanese Patent Application Laid-Open No. 2008-238018
[Patent Literature 3] Japanese Patent Application Laid-Open No. 2001-333323

### Summary of Invention

### [Technical Problem]

As the invention disclosed in patent literature 1, when an image in an electronic still camera is uploaded to a server on the Internet via a mobile communication terminal, the user mainly operates the electronic still camera. When the communication state between the mobile communication terminal and the base station is bad, communication is interrupted during the upload and may fail to upload the image. For this reason, the user needs to confirm the communication state between the mobile communication terminal and the base station, that is, the electric field intensity in the mobile communication terminal and to upload.

As the invention disclosed in patent literature 3, when the radio field intensity of the wireless communication between a mobile communication terminal and a base station is displayed in an electronic still camera, the communication state in the mobile communication terminal can be confirmed. However, when an image in an electronic still camera is uploaded to a server via a mobile communication terminal, furthermore, communication state between the electronic still camera and the mobile communication terminal also needs to be confirmed. The description on such case is not disclosed at all in patent literature 3. The description on displaying the two communication states; communication state between the electronic still camera and the mobile communication terminal and the communication state between the mobile communication terminal and the base station, is neither disclosed at all by patent literature 1 nor 2.

An object of the present invention is to solve the above-mentioned problem, and provide a communication apparatus, a mobile communication terminal, a communication system, and a display method, which can confirm each communication state on the wireless communication paths.

### [Solution to Problem]

In order to achieve the above-mentioned object, a communication apparatus of the present invention is a communication apparatus relaying at least one mobile communication terminal to perform wireless communication with a base station and including: an electric field intensity detecting means that detects an electric field intensity in the wireless communication between said communication apparatus and said mobile communication terminal; and a receiving means that receives a signal that includes information on an electric field intensity in the wireless communication between said mobile communication terminal and said base station or includes information on an electric field intensity in the communication between mobile communication terminals and information on an electric field intensity in the wireless communication between said mobile communication terminal and the base station.

Further, a mobile communication terminal of the present invention includes the internet communication means that connects to the internet, a wireless communication means that communicates with an external communication apparatus, and a routing control means that performs routing the communication data from said communication apparatus to said internet.

Furthermore, a communication system of the present invention includes the communication apparatus mentioned above, and the mobile communication terminal mentioned above that wirelessly sends or receives by the communication apparatus.

Moreover, a display method in a communication apparatus of the present invention is a display method in a communication apparatus relaying at least one mobile communication terminal to perform wireless communication with a base station and including: detecting step that detects communication intensity in the wireless communication between said communication apparatus and said mobile communication terminal; and a receiving step that receives a signal that includes information on an electric field intensity in the wireless communication between said mobile communication terminal and said base station or includes information on an electric field intensity in the communication between mobile communication terminals and information on an electric field intensity in the wireless communication between said mobile communication terminal and the base station, and a displaying step that displays the electric field intensity detected by said detecting step and the electric field intensity in said signal received in said receiving step.

### [Advantageous Effects of Invention]

According to the present invention, each electric field intensity on the wireless communication paths can be confirmed. As a result, the user can avoid use when the communication state is bad, and move to a place with the better communication state for use, by confirming each electric field intensity. As a result, according to the present invention, losing communication during transmission can be avoided to the utmost.

### Brief Description of Drawings

[FIG. 1]

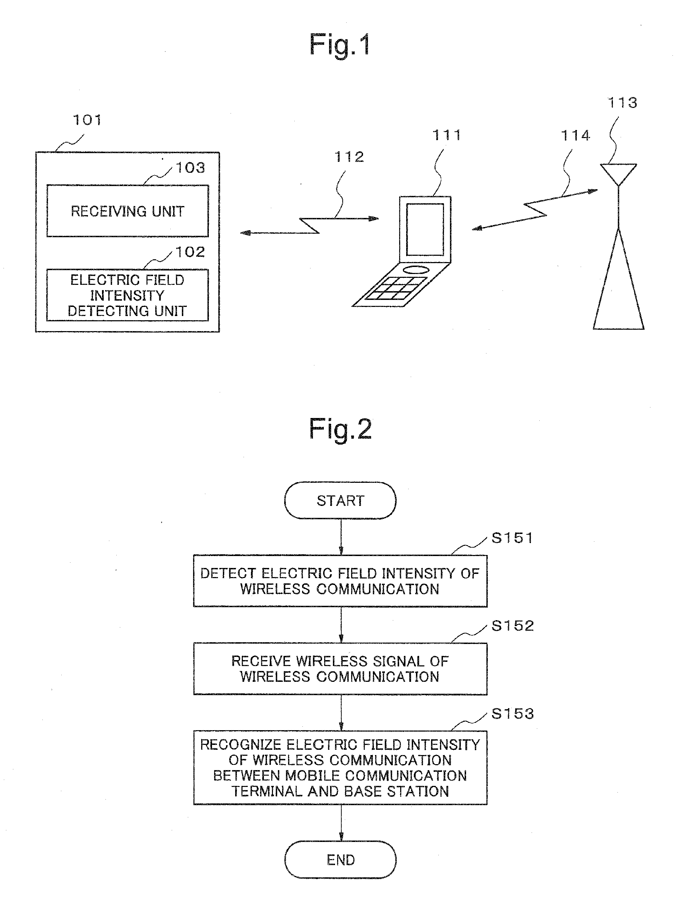

   FIG. 1 is a schematic diagram of a communication apparatus according to first embodiment.
[FIG. 2]
   FIG. 2 is a flowchart showing operation of the communication apparatus of the first embodiment.
[FIG. 3]

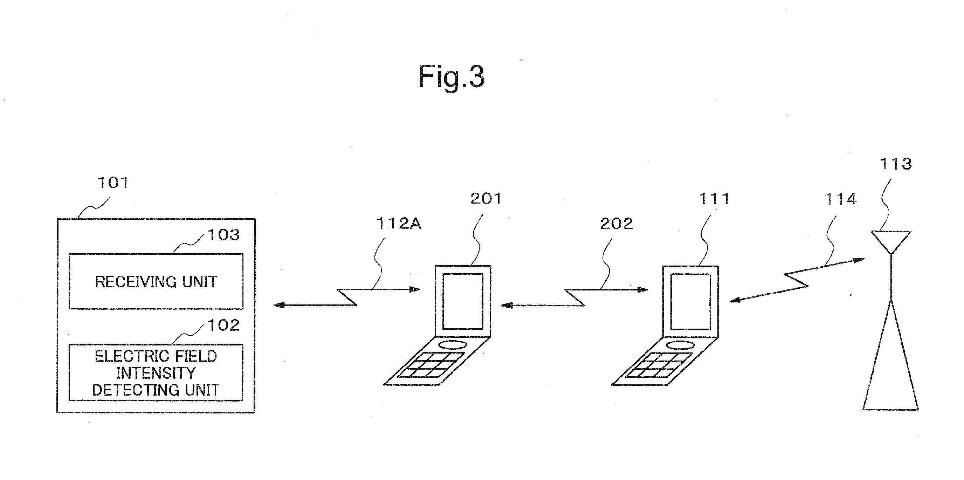

   FIG. 3 is a schematic diagram of a communication apparatus of second embodiment.
[FIG. 4]

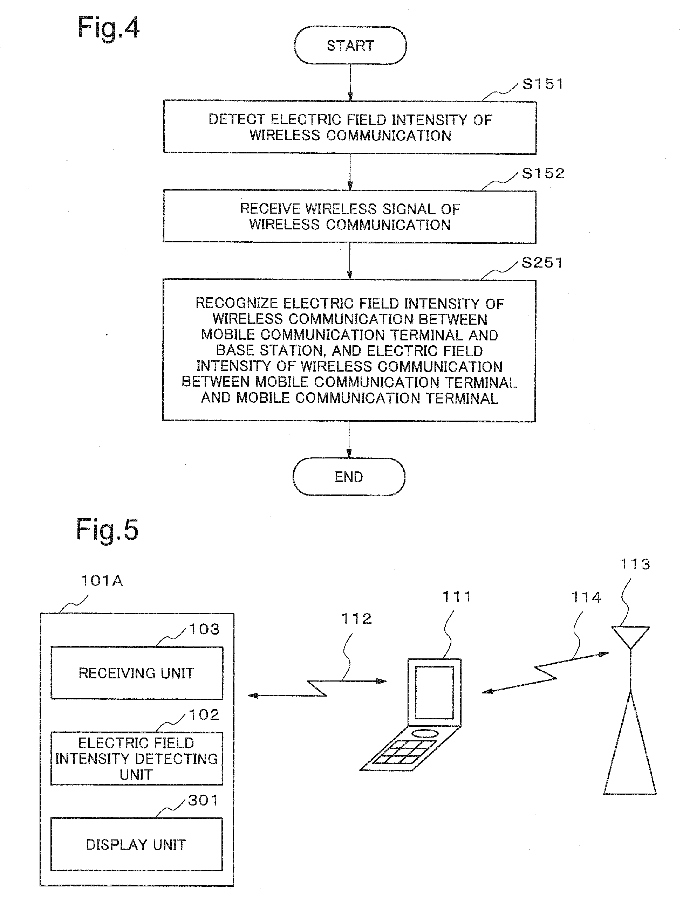

   FIG. 4 is a flowchart showing operation of the communication apparatus of the second embodiment.
[FIG. 5]
   FIG. 5 is a schematic diagram of a communication apparatus of third embodiment.
[FIG. 6]

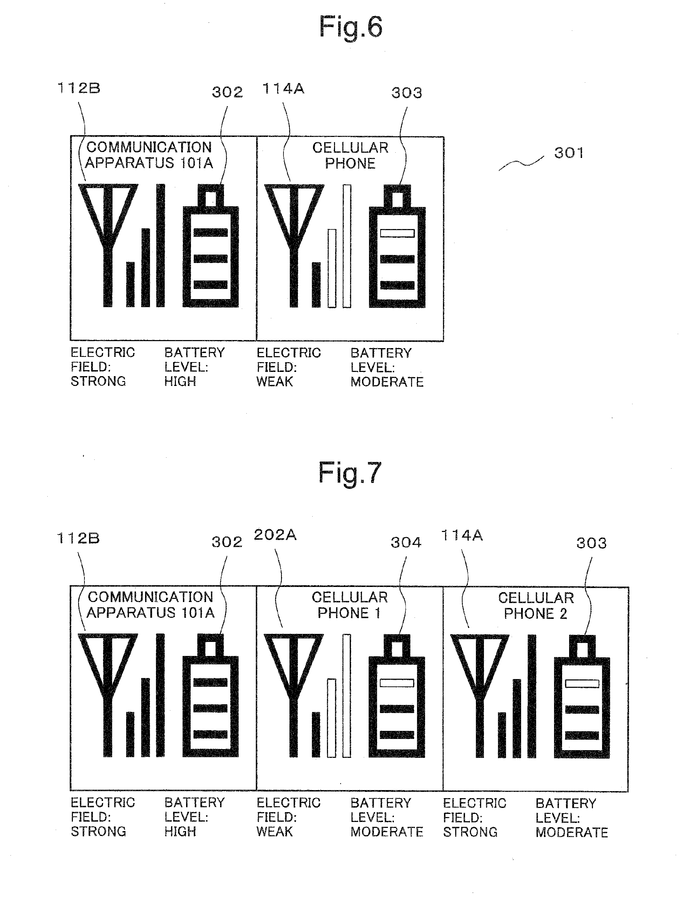

   FIG. 6 is an explanatory diagram showing an example of display in the communication apparatus of the third embodiment.
[FIG. 7]
   FIG. 7 is an explanatory diagram showing other examples of display in the communication apparatus of the third embodiment.
[FIG. 8]

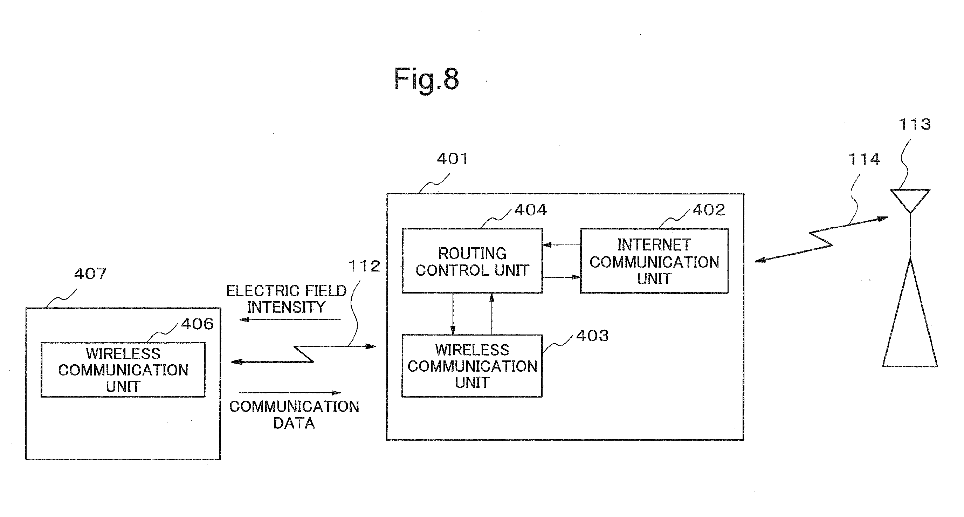

   FIG. 8 is an explanatory diagram showing schematic configuration of a mobile communication terminal of fourth embodiment.
[FIG. 9]

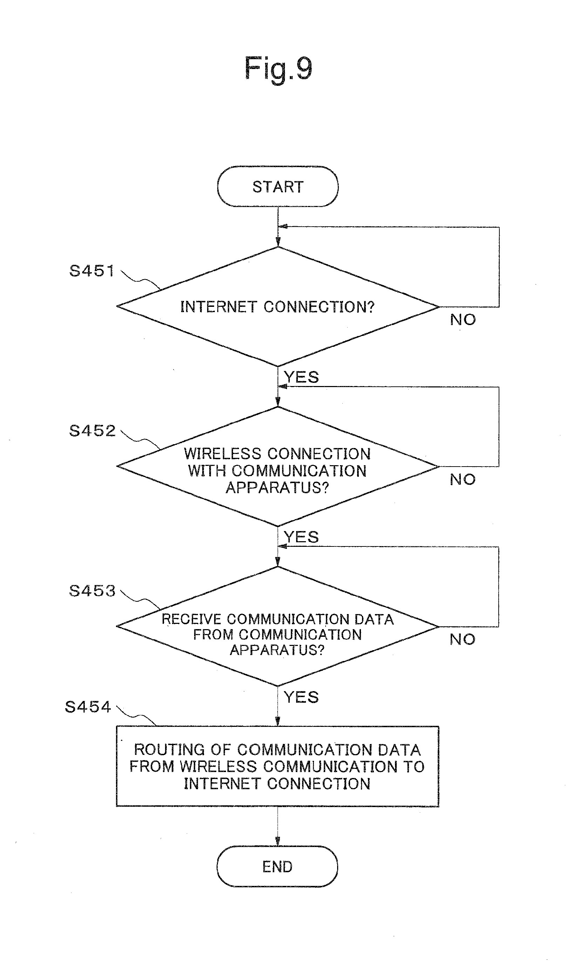

   FIG. 9 is a flowchart showing operation of the mobile communication terminal of the fourth embodiment.
[FIG. 10]

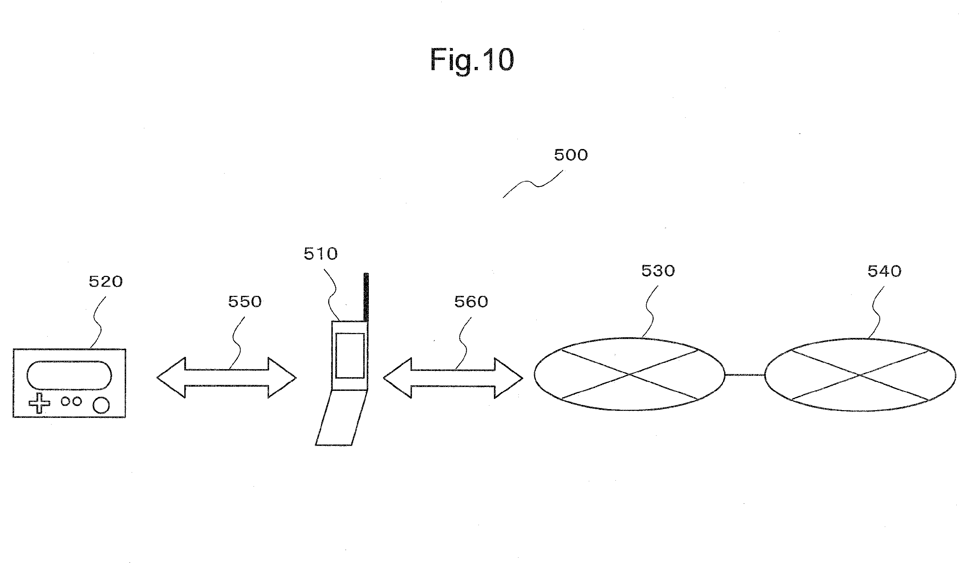

   FIG. 10 is an explanatory diagram showing schematic configuration of a communication system of fifth embodiment.
[FIG. 11]

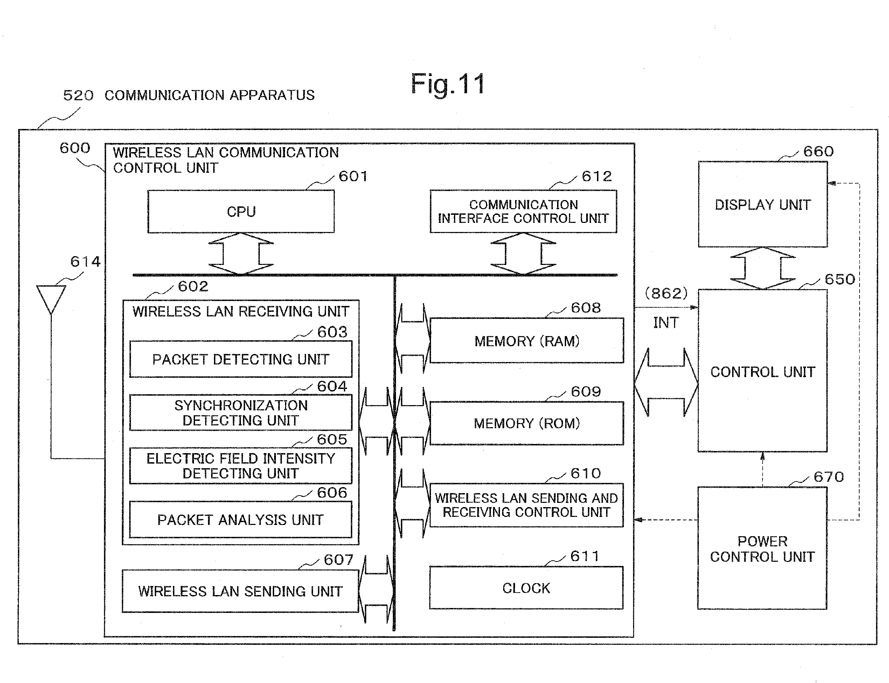

   FIG. 11 is a schematic diagram of a communication apparatus used by the communication system of the fifth embodiment.
[FIG. 12]

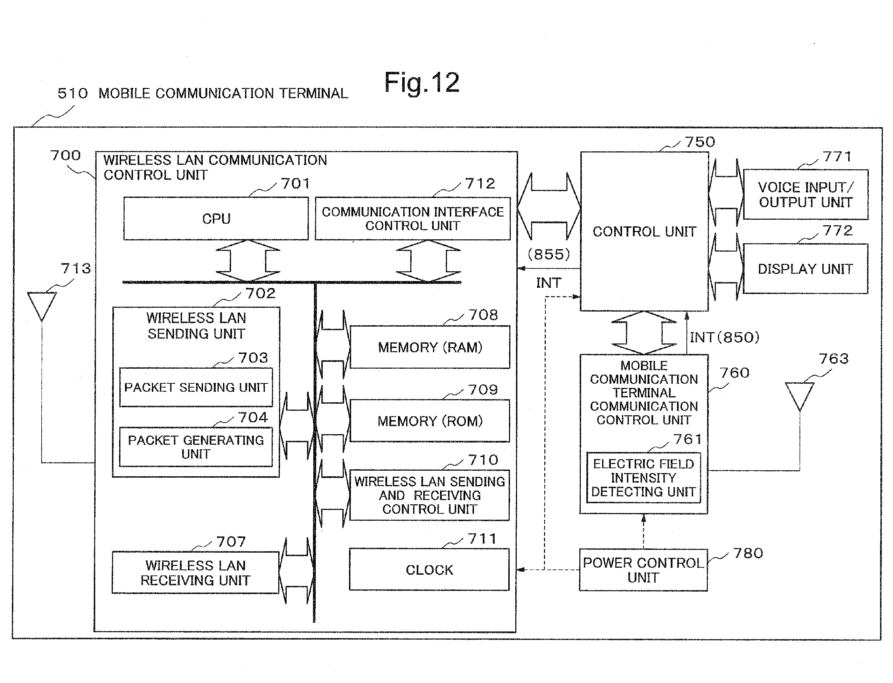

   FIG. 12 is a schematic diagram of a mobile communication terminal used by the communication system of the fifth embodiment.
[FIG. 13]

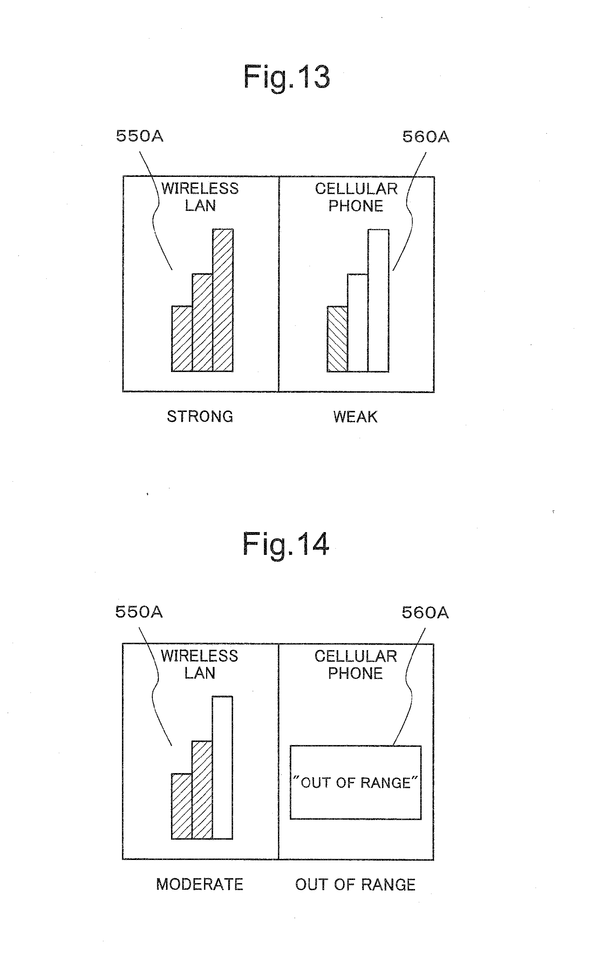

   FIG. 13 is an explanatory diagram of a display mark indicated by a communication apparatus.
[FIG. 14]
   FIG. 14 is an explanatory diagram showing display in which the display mark is different.
[FIG. 15]

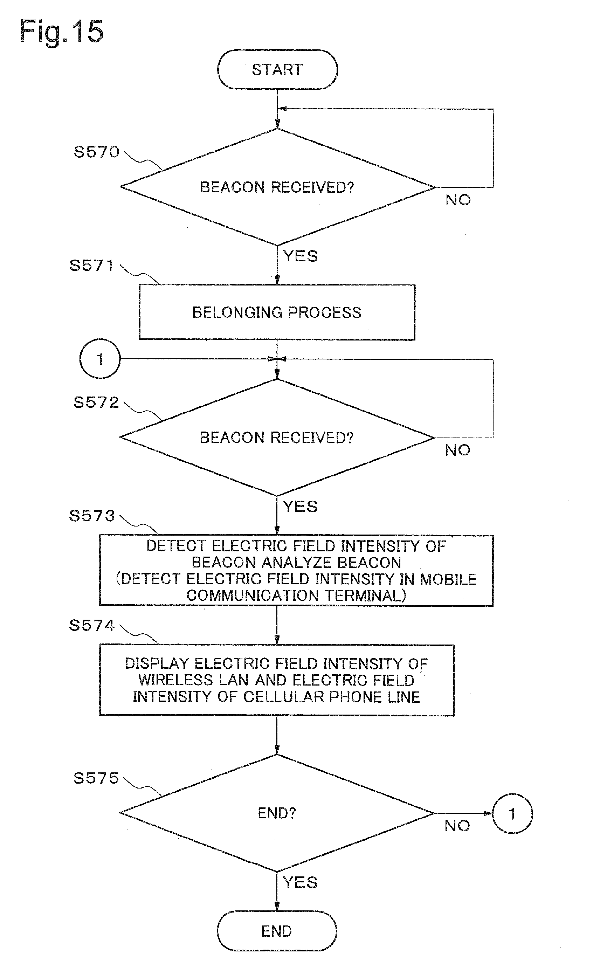

   FIG. 15 is a flowchart showing a display operation of a communication apparatus.
[FIG. 16]

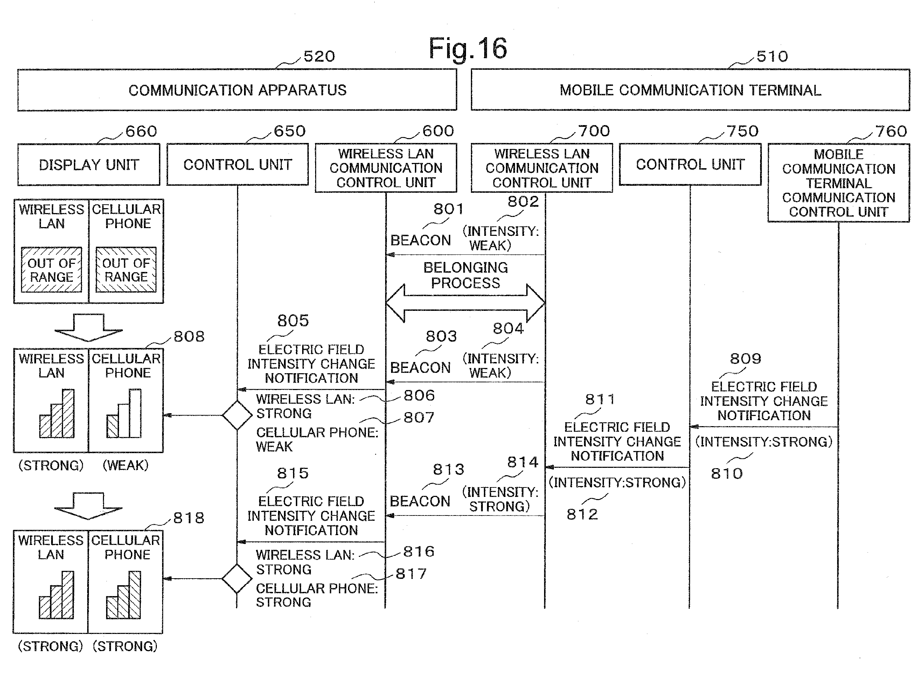

   FIG. 16 is an explanatory diagram showing change of electric field intensity in a communication system and display state thereof.
[FIG. 17]

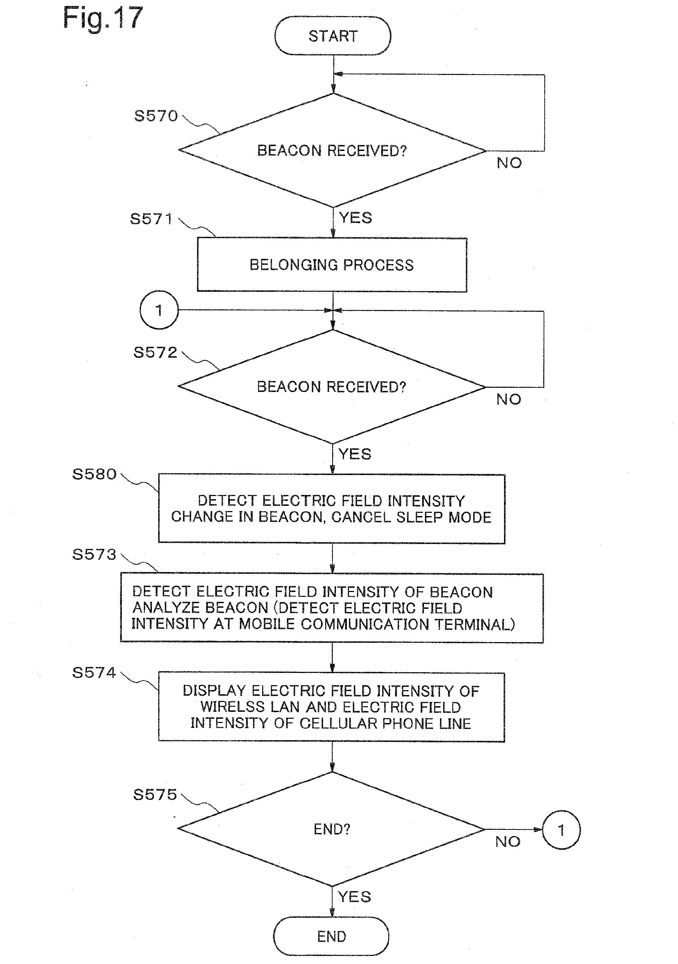

   FIG. 17 is a flowchart showing a display operation of a communication apparatus in a communication system of sixth embodiment.
[FIG. 18]

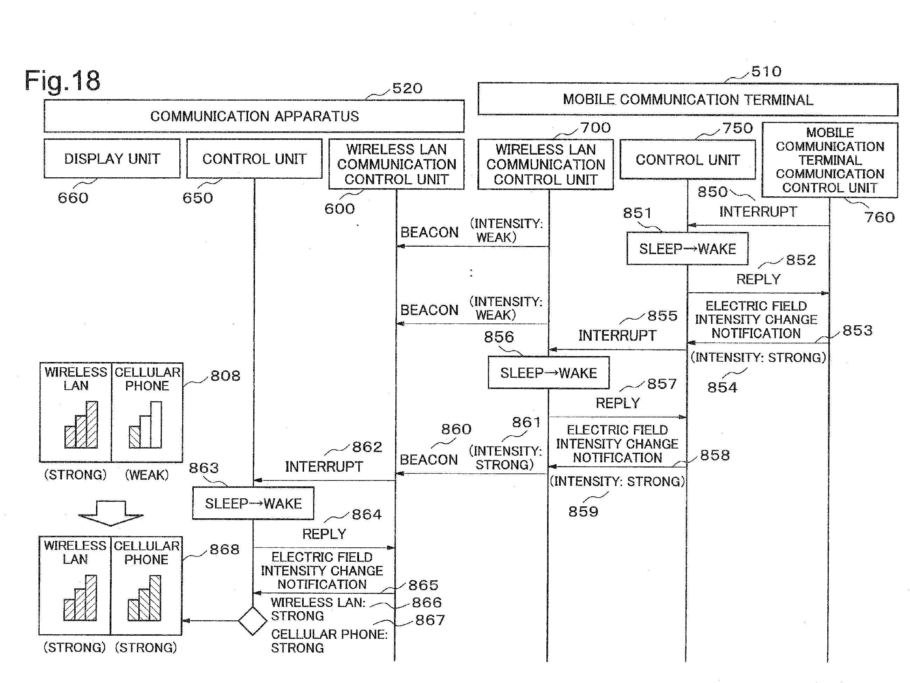

   FIG. 18 is an explanatory diagram showing change of electric field intensity in the communication system and display state thereof according to the sixth embodiment.
[FIG. 19]

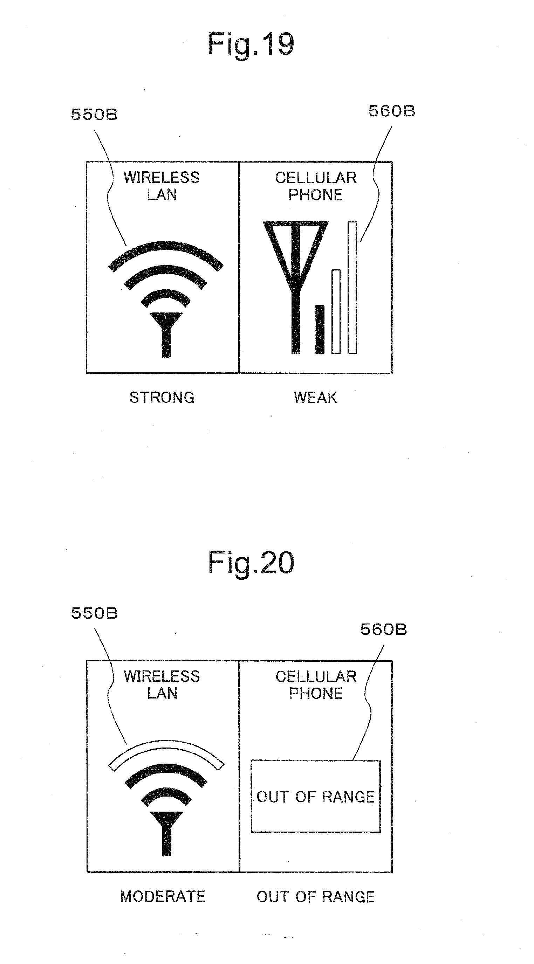

   FIG. 19 is an explanatory diagram of the display mark indicated by the communication apparatus of the sixth embodiment.
[FIG. 20]
   FIG. 20 is an explanatory diagram showing display in which the display mark of the sixth embodiment is different.

### Reference Signs List

101, 101A, 407, 520 communication apparatus
102, 605, 761 electric field intensity detecting unit
103 receiving unit
1 1 1 , 201, 401 , 510 mobile communication terminal
112, 112A, 112B, 114, 114A, 202, 550A, 550B, 560A, 560B electric field intensity
113 base station
301, 660, 772 display unit
302, 303, 304 battery remaining amount
402 Internet communication unit
403 wireless communication unit
404 routing control unit
500 communication system
530 cellular phone network
540 the Internee
550 wireless LAN
560 cellular phone line
600, 700 wireless LAN communication control unit
601, 701 CPU
602, 707 wireless LAN receiving unit
603, 606, 703, 704 packet analyzing unit
604 synchronization detecting unit
607, 702 wireless LAN sending unit
608, 609, 708, 709 memory.
610, 710 wireless LAN sending and receiving control unit
611,711 clock
612, 712 communication interface control unit
614, 713, 763 antenna
650, 750 control unit
670, 780 power control unit
760 mobile communication terminal communication control unit
771 voice input output unit
801, 813, 860 beacon
802, 804, 806, 807, 810, 812, 814, 816, 817, 854, 859, 861, 866, 867 electric field information
805, 809, 811 , 815, 853, 858, 865 electric field intensity change notification
808,818,868 electric field display
850, 855, 862 interrupt signal
851 control.
852, 857, 864 response signal

### Description of Exemplary Embodiments

Next, the present invention will be described with the embodiments.

### <The first exemplary embodiment>

The first exemplary embodiment of the present invention will be described based on FIG. 1 and FIG. 2.

FIG. 1 is a schematic diagram of a communication apparatus in the first embodiment. FIG. 2 is a flowchart showing operation of the communication apparatus.

In FIG. 1, a communication apparatus 101 performs wireless communication with a base station 113 via at least one mobile communication terminal 111.

The communication apparatus 101 includes an electric field intensity detecting unit 102 and a receiving unit 103. The electric field intensity detecting unit 102 is an electric field intensity detecting means which detects electric field intensity 112 in the wireless communication between the apparatus itself (communication apparatus 101) and the mobile communication terminal 111. The receiving unit 103 is a receiving means which receives a signal including information on electric field intensity 114 in the wireless communication between the mobile communication terminal 111 and the base station 113.

The communication apparatus 101 as described above operates as a flowchart shown in FIG. 2.

First, the electric field intensity detecting unit 102 detects the electric field intensity 112 of the wireless communication between the communication apparatus 101 and the mobile communication terminal 111 (S151). Then, the receiving unit 103 receives a signal from the mobile communication terminal 111 (S152). In the signal hereof, information on the electric field intensity 114 of the wireless communication between the mobile communication terminal 111 and the base station 113 is included.

The communication apparatus 1 01 , from the received signal, recognizes the electric field intensity 114 in the wireless communication between the mobile communication terminal 111 and the base station 113 (S153).

The communication apparatus 101 as operating as above, can recognize the electric field intensity 112 of the wireless communication between the communication apparatus 101 and the mobile communication terminal 111. The communication apparatus 101 can also recognize the electric field intensity 114 in the wireless communication between the mobile communication terminal 111 and the base station 113. Accordingly, the communication apparatus 101 can recognize the communication state of each wireless communication path to the base station 113 from the apparatus itself (the communication apparatus 101).

As a result, the user can avoid use when the communication state is bad, and move to a place with the better communication state for use, by confirming each electric field intensity. For this reason, according to the communication apparatus 101, losing communication while performing wireless communication with the base station 113 via the mobile communication terminal 111 can be avoided to the utmost.

### <The second exemplary embodiment>

The second exemplary embodiment of the present invention will be described based on FIG. 3 and FIG. 4.

FIG. 3 is a schematic diagram of a mobile communication terminal in the second exemplary embodiment. FIG. 4 is a flowchart showing operation of the mobile terminal in the second exemplary embodiment. Further, an identical reference sign is given to each of the elements and a control step identical with FIG. 1 and FIG. 2.

In FIG. 3, a communication apparatus 101 performs wireless communication with a base station 113 via a mobile communication terminal 201 and a mobile communication terminal 111.

The communication apparatus 101 includes an electric field intensity detecting unit 102 and a receiving unit 103. The electric field intensity detecting unit 102 detects electric field intensity 112A in the wireless communication between the apparatus itself (communication apparatus 101) and the mobile communication terminal 201. The receiving unit 103 receives a signal including information on electric field intensity 114 in the wireless communication between the mobile communication terminal 111 and the base station 113, from the mobile communication terminal 111 via the mobile communication terminal 201. Further, the receiving unit 103 receives a signal including information on electric field intensity 202 in the wireless communication between the mobile communication terminal 201 and the mobile communication terminal 111 from the mobile communication terminal 201.

The mobile communication terminal 201 has a routing control unit routing signal from the communication apparatus 101 to the mobile communication terminal 111 (not shown in the figure). As a result, signal from the communication apparatus 101 is sent to the mobile communication terminal 111 via the mobile communication terminal 201. Further, the signal is sent to the base station 113 from the mobile communication terminal 111. As a result, the communication apparatus 101 performs wireless communication with the base station 113 via the mobile communication terminal 201 and the mobile communication terminal 111. In order to have a stable communication, it is necessary to have three electric field intensities, the electric field intensities 112A, 202 and 114, greater than predetermined.

The communication apparatus 101 as described above operates as a flowchart shown in FIG. 4.

First, the electric intensity detecting unit 102 detects the electric field intensity 112A of the wireless communication between the communication apparatus 1 01 and the mobile communication terminal 201 (S151). Next, the receiving unit 103 receives a signal from the mobile communication terminal 111 via the mobile communication terminal 201 (S152). In the signal hereof, information on the electric field intensity 114 of the wireless communication and information on the electric field intensity 202 are included. The communication apparatus 1 01 , from the received signal, recognizes the electric field intensity 114 and the electric field intensity 202 (S251).

When performing wireless communication with the base station 113 via the mobile communication terminal 201 and the mobile communication terminal 111 from the communication apparatus 1 01 , if the communication state of three wireless communication paths is not greater than predetermined level, there is a possibility of losing communication in mid-course.

According to the communication apparatus 1 01 , because the user can recognize the electric field intensity 112A, the electric field intensity 202, and the electric field intensity 114 corresponding to three wireless communication paths respectively, it is possible to confirm the electric field intensity during communication. For example, the user can move to the direction where the electric field intensity becomes stronger and communicate there. Further, when it is not possible to move to a place where the electric field intensity becomes stronger, the user can consider the loss of communication in mid-course, and can response such as not to communicate, or to have communication such that it would not cause any problems even if communication is lost in mid-course.

### <The third exemplary embodiment>

The third exemplary embodiment of the present invention will be described based on FIG. 5 to FIG. 7.

FIG. 5 is a schematic diagram of a communication apparatus in the third exemplary embodiment. FIG. 6 is an explanatory diagram showing a display of the display unit in the communication apparatus. FIG. 7 is an explanatory diagram showing other examples of display in the communication apparatus. Further, an identical reference sign is given to the same elements as FIG. 1 and FIG. 3.

A communication apparatus 101A has a display unit 301 to the communication apparatus 101 in the first exemplary embodiment. The display unit 301 displays electric field intensity 112 and electric field intensity 114.

As shown in FIG. 6, electric field intensity 112B of the left side indicates the electric field intensity 112, and electric field intensity 114A of the right side indicates the electric field intensity 114.

The electric field intensity can be indicated at four stages of "strong", "moderate", "weak", and "out of range".

By the display of the display unit 301 , the user can visually recognize a communication path with the weak electric field intensity. As a result, the user moves to a place where the electric field intensity of the communication path with the weak electric field strength becomes strong, and wireless communication can be kept from loss.

Further, as shown in FIG. 6, in the display unit 301 , a mark (battery remaining amount 303) which indicates the battery remaining amount of a mobile communication terminal 111 as well as information on the electric field intensity is displayed. Further, a battery remaining amount 302 is a mark which indicates the battery remaining amount of the communication apparatus 101A.

That is, the display shown in FIG. 6 hereof, is composed by a display method in a communication apparatus including a battery remaining amount detecting step, a battery remaining amount receiving step, and a displaying step. The battery remaining amount detecting step is a step which detects the battery remaining amount 302 of the communication apparatus 101A. The battery remaining amount receiving step is a step which receives a signal including information on the battery remaining amount 303 of the mobile communication terminal 111.

A displaying step which displays the electric field intensity 112B and the electric field intensity 114A displays the battery remaining amount 302 detected by the battery remaining amount detecting step and the battery remaining amount 303 in the signal received in a battery remaining amount receiving step.

Because the electric field intensities 112B and 114A and the battery remaining amounts 302 and 303 are shown to the display unit 301 at the same time, the user can visually recognize the state of possibility to have loss in wireless communication such as when the electric field intensity is weak or the battery remaining amount is low. As a result, the user can respond to remove a possible factor for lost in wireless communication. For example, the user can move to a place with the good communication state. Further, the user can respond as to charge the equipment which does not have much battery remaining amounts.

FIG. 7 is an explanatory diagram showing different displays in the display unit 301 of the communication apparatus 101A.

FIG. 7 is a display example when the communication apparatus 101A in the third exemplary embodiment performs wireless communication with the base station 113 via the mobile communication terminal 201 and the mobile terminal 111 shown in FiG. 3. The electric field intensity 202A indicated in the center indicates the electric field intensity 202 in the wireless communication between the mobile communication terminal 201 and the mobile communication terminal 111. A battery remaining amount 304 indicates the battery remaining amount of the mobile communication terminal 201.

When the communication apparatus 101A communicates with the base station 113 via the mobile communication terminal 201 and the mobile communication terminal 111, the number of the communication paths is three. The three paths are: a path from the communication apparatus 1 01A to the mobile communication terminal 201 , a path from the mobile communication terminal 201 to the mobile communication terminal 111, and a path from the mobile communication terminal 111 to the base station 1 13. According to the exemplary embodiment shown in FIG. 7, the electric field intensity in each of these three communication paths is indicated. The user can visually confirm the possibility of which communication path relates to loss of communication. As a result, the user can respond such as to move to a place with the better communication state, or to charge the equipment.

### <The fourth exemplary embodiment>

The fourth exemplary embodiment of the present invention will be described based on FIG. 8 and FIG. 9.

FIG. 8 is a schematic diagram of a mobile communication terminal in the fourth exemplary embodiment. FIG. 9 is a flowchart showing operation of the mobile communication terminal. Further, an identical reference sign is given to the element identical with the first to third embodiment.

A mobile communication terminal 401 shown in FIG. 8 includes an Internet communication unit 402, a wireless communication unit 403, and a routing control unit 404.

The Internet communication unit 402 is the Internet communication means which performs a communication control for connecting with the Internet via the base station 113. The wireless communication unit 403 is a wireless communication means which performs a communication control with an external communication apparatus 407 including a wireless communication unit 406. The routing control unit 404 is a routing control means which makes the routing of communication data received in the wireless communication unit 403 through the wireless communication unit 406 from the communication apparatus 407 to the Internet (not shown in the figure) via the base station 113.

The mobile communication terminal 401 as described above operates as a flowchart shown in FIG. 9.

First, a control unit of the mobile terminal 401 , which is not shown in the figure, determines whether the Internet communication unit 402 is connected to the Internet (S451). When connected to the Internet (YES in S451), the control unit determines whether the communication apparatus 407 is connected by a wireless communication (S452). When connected with the communication apparatus 407 by wireless communication (YES in S452), the control unit determines whether there is a communication data from the communication apparatus 407 (S453). When there is a communication data from the communication apparatus 407 (YES in S453), the routing control unit 404 makes the routing of the communication data to the Internet connection (S454).

The mobile communication terminal 401 which operates as above can confirm the connection state with the base station 1 13, in other words the communication state such as the electric field intensity in the Internet connection. Moreover, the mobile communication terminal 401 can also confirm the connection state with the communication apparatus 407, in other words the communication state such as the electric field intensity in the wireless communication. For this reason, the mobile communication terminal 401 can perform routing of communication data from the communication apparatus 407 to the Internet when the communication state with the communication apparatus 407 is good and further when the communication state is also good with the internet. As a result, according to the third exemplary embodiment, failure of routing of a communication data can be suppressed to the utmost.

### <The fifth exemplary embodiment>

Next, the fifth exemplary embodiment of the present invention will be described based on FIG. 10 to FIG. 16.

FIG. 10 is an explanatory diagram showing schematic configuration of a communication system in the fifth exemplary embodiment of the present invention. FIG. 11 is a schematic diagram of a communication apparatus used in the communication system. FIG. 12 is a schematic diagram of a mobile communication terminal used in the communication system. FIG. 13 is an explanatory diagram of a display mark indicated by a communication apparatus. FIG. 14 is an explanatory diagram of display shown in which the display mark is different. FIG. 15 is a flowchart showing a display operation of the communication apparatus. FIG. 16 is an explanatory diagram showing change of electric field intensity in the communication system and display state thereof.

As shown in FIG. 10, a communication system 500 includes a communication apparatus 520 and a mobile communication terminal 510.

The communication apparatus 520 communicates with the mobile communication terminal 510 via a wireless LAN (Local Area Network) 550. The mobile communication terminal 510 communicates with the communication terminal 520 using the wireless LAN 550 and connects with a cellular phone network 530 or the Internet 540 via a cellular phone line 560.

For example, the communication apparatus 520 shown in FIG. 11 are a game machine, an electronic still camera, a PDA (Personal Digital Assistants) and a portable laptop computer or the like.

The communication apparatus 520 includes a wireless LAN communication control unit 600, a control unit 650, a display unit 660, and a power control unit 670.

The wireless LAN communication control unit 600 communicates with the mobile communication terminal 510 using the wireless LAN 550. The control unit 650 controls each element in the communication apparatus 520. The display unit 660 displays characters and various figures. The display unit 660, for example, is a display means for which liquid crystal display is used. The power control unit 670 controls supply of power to each element.

The wireless LAN communication control unit 600 includes a CPU (Central Processing Unit) 601 , a wireless LAN receiving unit 602, a wireless LAN sending unit 607, a memory 608, and a memory 609. Further, the wireless LAN communication control unit 600 includes a wireless LAN sending and receiving control unit 61 0, a clock 61 1 , a communication interface control unit 612, and an antenna 614 for wireless LAN communications.

The CPU 601 controls each element in the wireless LAN communication control unit 600. The wireless LAN receiving unit 602 receives a signal of the wireless LAN 550 via the antenna 614. The wireless LAN sending unit 607 sends a signal of the wireless LAN 550 via the antenna 614. As a result, the communication apparatus 520 can communicate with the mobile communication terminal 510 via the wireless LAN 550. For this reason, with the wireless LAN receiving unit 602 and the wireless LAN sending unit 607, the wireless LAN communication means which communicates with the mobile communication terminal 510 by the wireless LAN is composed. The memory 608 is a memory storage which can be read and written, and RAM (Random Access Memory) is used. The memory 609 is a memory storage for reading only, and ROM (Read Only Memory) is used. The memory 609 stores a control program or the like. The wireless LAN sending and receiving control unit 610 controls sending and receiving in a wireless LAN. The clock 611 generates the clock frequency for synchronization of processes between each element. The communication interface control unit 612 controls on a communication interface.

The wireless LAN receiving unit 602 includes a packet detecting unit 603, a synchronization detecting unit 604, an electric field intensity detecting unit 605, and a packet analyzing unit 606.

The packet detecting unit 603 detects whether a packet is included in the received signal. The synchronization detecting unit 604 detects synchronization in each element. The electric field intensity detecting unit 605 detects the electric field intensity of the received signal, in other words the electric field intensity of the wireless LAN 550. The packet analyzing unit 606 analyzes a packet and detects the electric field intensity of the cellular phone line 560.

Further, the wireless LAN communication control unit 600 sends an interrupt signal 862 as described hereinafter, to the control unit 650.

The mobile communication terminal 510 shown in FIG. 12, for example is a cellular phone and PHS (Personal Handy-phone System) or the like.

The mobile communication terminal 510 includes a wireless LAN communication control unit 700, a control unit 750, a mobile communication terminal communication control unit 760, a voice input output unit 771, a display unit 772 and a power control unit 780.

The wireless LAN communication control unit 700 includes a CPU 701, a communication interface control unit 712, a wireless LAN sending unit 702, a wireless LAN receiving unit 707, a memory 708, a memory 709, a wireless LAN sending and receiving control unit 710, and a clock 711. The elements described above are connected via a bus. The wireless LAN sending unit 702 includes a packet sending unit 703 and a packet generating unit 704. Further, an antenna 713 is connected to the wireless LAN communication control unit 700.

The mobile communication terminal communication control unit 760 includes an electric field intensity detecting unit 761. An antenna 763 is connected to the mobile communication terminal communication control unit 760.

The power control part 780 supplies a power to each element.

Further, the mobile communication terminal communication control unit 760 sends an interrupt signal 850 to the control unit 750, as mentioned hereinafter. Further, the control unit 750 sends an interrupt signal 855 to the wireless LAN communication control unit 700, as mentioned hereinafter.

As shown in FIG. 13, electric field intensity 550A and electric field intensity 560A are displayed side by side, to the display unit 660 in the communication apparatus 520. The electric field intensity 550A indicates the electric field intensity of the wireless LAN 550, and the electric field intensity 560A indicates the electric field intensity of the cellular phone line 560.

FIG. 13 is an example when the electric field intensity 550A of the wireless LAN 550 is "strong", and the electric field intensity 560A of the cellular phone line 560 is "weak". FIG. 14 is an example when the electric field intensity 550A of the wireless LAN 550 is "moderate", and the electric field intensity 560A in the cellular phone line 560 is "out of range".

As shown in FIG. 13 and FIG. 14, the electric field intensities 550A and 560A are indicated at four stages: "strong", "moderate", "weak" and "out of range". Further, in order to make the display easier to determine, the color of the display of the electric field intensity 550A and the display of the electric field intensity 560 A can be changed.

The communication apparatus 520 in the communication system 500 as configured as above operates as a flowchart shown in FIG. 15.

First, the wireless LAN receiving unit 602 determines whether the wireless LAN receiving unit 602 received a beacon from the mobile communication terminal 510 (S570). When receiving a beacon (YES in S570), imputing processing is carried out to the mobile communication terminal 510 (S571). The wireless LAN receiving unit 602 determines whether a beacon was received once again, after the completion of imputing processing (S572). When receiving a beacon (YES in S572), the electric field intensity detecting unit 605 detects the electric field intensity of the beacon, that is, the electric field intensity 550A of the wireless LAN 550. The packet analyzing unit 606 analyzes a beacon and detects the electric field intensity 560A of the cellular phone line 560 (S573).

Next, the display unit 660 displays the electric field intensity 550A of the wireless LAN 550 and the electric field strength 560A of the cellular phone line 560 (S574). Then, it is determined whether it ends (S575), and when it is not to be end (NO in S575), control shifts to S572.

In the communication apparatus 520 as described above, likewise the communication apparatus 101 of the first exemplary embodiment, the electric field intensity 550A of the wireless LAN 550 and the electric field intensity 560A of the cellular phone line 560 can be detected. For this reason, the user can confirm two electric field intensities 550A and 560A and use the communication apparatus 520. As a result, from the communication apparatus 520, operational failure using the mobile communication terminal 510 can be suppressed to the utmost.

Further, when a game machine is used for the communication apparatus 520, it is possible to communicate with a server for games as an external device connected to the Internet 540 and a game machine. In this case, in the communication apparatus (game machine) 520, the user can check the communication state and pay attention not to lose connection. As a result, by using the communication system 500, the user can suppress a lost in communication during a game to the utmost.

Further when an electronic still camera is used, for the communication apparatus 520, it is possible to communicate with a server for image storage as an external device connected to the internet 540. In this case, in the communication apparatus (electronic still camera) 520, because image data can be uploaded to a server after the communication state is confirmed, failure of upload can be suppressed to the utmost.

Moreover, when a portable PC or a personal mobile terminal is used, for the communication apparatus 520, it is possible to communicate with a server for data backups as an external device connected to the Internet 540 and a server for thin client. In this case, in the communication apparatus (portable PC or personal mobile terminal) 520, because data can be supported in a server after the communication state is confirmed, failure of a backup can be suppressed to the utmost. When communicating with a server for thin client, the possibility of the communication apparatus 520 not operating caused by communication lost in mid-course, can be suppressed to the utmost.

Next, based on FIG. 16, a change of electric field intensity in the communication system 500 and the display state thereof will be described.

The wireless LAN communication control unit 700 of the mobile communication terminal 510 sends a beacon to the communication apparatus 520 by a regular interval.

The wireless LAN communication control unit 700 in the mobile communication terminal 510 sends a beacon 801 to the wireless LAN communication control unit 600 in the communication apparatus 520. Electric field information 802 on the mobile communication terminal 510 is included in the beacon 801. For this reason, the wireless LAN communication control unit 700 corresponds to a transmission means which includes information about the electric field intensity in a beacon and sends to the communication apparatus 520. In FIG. 16, the electric field information 802 on the mobile communication terminal 510 of the beacon 801 sent at the beginning is "wreak".

The communication apparatus 520, which includes wireless LAN communication functions, performs monitoring a beacon in the wireless LAN communication control unit 600. When the beacon 801 is detected in the wireless LAN communication control unit 600, the electric field intensity 550A of the wireless LAN 550 is detected at the field intensity detecting unit 605. Further, the electric field intensity 560A of the cellular phone line 560 is detected at the packet analyzing unit 606. Afterwards, the control unit 650 in the communication apparatus 520 performs belonging process to the mobile communication terminal 510.

After belonging process ends, when the wireless LAN communication control unit 600 in the communication apparatus 520 receives a beacon 803 including the electric field information 804 on the mobile communication terminal 510 once again, an electric field intensity change notification 805 is sent to the control unit 650 from the wireless LAN communication control unit 600. The electric field information 806 on the wireless LAN 550 and the electric field information 807 on the cellular phone line 560 are included in the notification hereof. The control unit 650, based on the information hereof, performs electric field display indication 808 of the wireless LAN 550 and the cellular phone line 560 in the display unit 660. Further, the display design is not limited to as described above, and indication by after-mentioned FIG. 19 and FIG. 20 can also be used.

Further, when the electric field intensity 560A of the cellular phone line 560 changes, the electric field intensity detecting unit 761 in the mobile communication terminal 510 will detect the changes. Then, the mobile communication terminal communication control unit 760 sends the electric field intensity change notification 809 to the control unit 750 and notifies electric field information 810 to the control unit 750.

In an example of FIG. 16, the state that the electric field strength 560A changed into "strong" is indicated. Moreover, the control unit 750 sends electric field intensity change notification 811 to the wireless LAN communication control unit 700 and notifies an electric field information 812.

When the electric field information 812 is included in the electric field intensity change notification 81 1 , the packet generating unit 704 changes the electric field information on a beacon frame. Afterwards, the packet sending unit 703 sends a beacon 813 to the communication apparatus 520, including electric field information 814.

When the wireless LAN receiving unit 602 receives the beacon 813, the communication apparatus 520 takes out the electric field information 814 in the packet analyzing unit 606, and notifies the control unit 650 in the electric field intensity change notification 815, when there is a change from the previous electric field information.

In an electric field strength change notification 815, both of the electric field information 816 on the wireless LAN 550 and the electric field information 817 on the cellular phone line 560 are notified.

The control unit 650 performs an electric field display 818 of the wireless LAN 550 and the cellular phone line 560 in the display unit 660, based on the information as described.

Further, in this example, although the display of electric field strength is set to four stages of "strong", '"moderate", "weak" and "out of range", it may be made to display of more detailed stages (display with more than five stages). Further, the electric field intensity can also be displayed by a number.

### <The sixth exemplary embodiment>

The sixth exemplary embodiment will be described based on FIG. 17 to FIG. 20.

The difference between the fifth exemplary embodiment and the sixth exemplary embodiment, is the point that a sleep mode to suppress the power consumption of the internal equipment can be set to a communication apparatus 520 and a mobile communication terminal 510. An identical reference sign is given to identical elements and control step in the fifth exemplary embodiment. In FIG. 18, description of belonging process is omitted.

FIG. 17 is a flowchart showing a display operation of a communication apparatus in a communication system of the sixth exemplary embodiment. FIG. 18 is an explanatory diagram showing change of electric field intensity in the communication system and display state thereof. FIG. 19 is an explanatory diagram showing a display mark indicated by the communication apparatus.

FIG. 20 is an explanatory diagram showing the display when the different mark is displayed.

The communication apparatus 520 in a communication system of the sixth exemplary embodiment operates as a flowchart shown in FIG. 17.

When a wireless LAN communication control unit 600 in the communication apparatus 520 receives a beacon (YES in S570), belonging process is performed to the mobile communication terminal 510 (S571).

Thus, after the belonging process, once again the wireless LAN communication control unit 600 determines whether a beacon is received again (S572). When a beacon is received (YES in S572), electric field intensity change information is detected in a beacon, and a sleep mode in the communication apparatus 520 is canceled (S580). Then, control shifts to S573. Further, because the subsequent operation is the same as the description in FIG. 15, it will be omitted.

The communication apparatus 520 as operated as above, sleep mode is canceled by a beacon with information indicating that the electric field intensity 560A of a cellular phone line 560 changed. In other words, when communication is not used and further, when in a state of the electric field intensity 560A of a cellular phone line 560 is not changed, the mobile communication terminal 510 is maintained by a sleep mode. For this reason, the power consumption in the communication apparatus 520 can be suppressed. Further, to the communication apparatus 510 mentioned hereinafter, a sleep mode is also controlled as to the communication apparatus 520. For this reason, the power consumption in the communication apparatus 520 can be suppressed.

Next, based on FIG. 18, a change of the electric field intensity and the display state in a communication system 500 will be described.

It is supposed that the communication apparatus 520 and the mobile communication terminal 510 are both in the sleep mode. Further, it is supposed that the electric field intensity 560A of the cellular phone line 560 is "weak".

When there is a change in the electric field intensity 560A of the cellular phone line 560, a mobile communication terminal communication unit 760 sends an interrupt signal 850 to the control unit 750. By receiving the signal, the control unit 750 performs a control 851 which cancels the sleep mode. Moreover, when the control unit 750 receives interrupt signal 850, the control unit 750 sends a reply signal 852 to the mobile communication terminal communication control unit 760. By receiving the reply signal 852, the mobile communication terminal communication control unit 760 sends an electric field intensity change notification 853 to the control unit 750. In the notification 853, electric field information 854 is included, which shows that the electric field strength 560A became "strong".

By receiving the notification 853, the control unit 750 sends an interrupt signal 855 to the wireless LAN communication control unit 700. By receiving the interrupt signal 855, the wireless LAN communication control unit 700 performs a control 856 which cancels the sleep mode. Then, the wireless LAN communication control unit 700 sends a reply signal 857. By receiving the reply signal 857, the control unit 750 sends an electric field intensity change notification 858 to the wireless LAN communication control unit 700. In electric field intensity strength change notification 858, electric field information 859 is included, in which the electric field strength is "strong". The wireless LAN communication control unit 700, which received the electric field intensity change notification 858, sends a beacon 860 to the wireless LAN communication control unit 600 in the communication apparatus 520. In the beacon 860, electric field information 861 is included, in which the electric field intensity 560A is "strung".

When the wireless LAN communication control unit 600 receives the beacon 860, the wireless LAN communication control unit 600 sends an interrupt signal 862 to the control unit 650. The control unit 650 which received the interrupt signal 862 performs a control 863 which cancels the sleep mode. Then, the control unit 650 sends a reply signal 864 to the wireless LAN communication control unit 600.

The wireless LAN communication control unit 600 sends an electric field intensity change notification 865 to the control unit 650, when the reply signal 864 is received. The electric field intensity change notification 865 includes electric field information 867 which shows that the electric field intensity 560A of the cellular phone line is "strong". Further, the electric field intensity change notification 865 includes electric field information 866 which shows that the electric field intensity 550A of the wireless LAN 550 is also "strong". Then, the control unit 650 switches to electric field display 868 indicating new electric field intensity of the wireless LAN 520 and the cellular phone line 560 in the display unit 660, based on the information mentioned above.

According to the communication system in the sixth exemplary embodiment, particularly in the communication apparatus 520 and the mobile communication terminal 510, the power consumption of the equipment is suppressed by a sleep mode when not using, and the sleep mode can be canceled only when necessary. For this reason, according to the communication system, the battery consumption of the communication apparatus 520 and the mobile communication terminal 510 can be suppressed.

Further, although indication of the wireless LAN 550 and the cellular phone line 560 were indicated by the identical form as a display example of the electric field intensity, indication of the wireless LAN and indication of a mobile terminal can be indicated by a different form, in order to determine more of the indication of the electric field intensity. An example of display in a different form is shown in FIG. 19 and FIG. 20, as an example of displaying by a different form is indicated.

FIG. 19 shows an example, when the electric field intensity 550B of the wireless LAN 550 is "strong", and the electric field intensity 560B of the cellular phone line 560 is "weak". Further, FIG. 20 shows an example when the electric field strength 550B of the wireless LAN 550 is "moderate", and an electric field intensity 560B of the cellular phone line 560 is "out of range".

Although the display is small, or the colors of the marks are identical, the display becomes easy to identify, when displayed with changing the shape of the mark as described above.

According to the sixth exemplary embodiment, communication between the communication apparatus 520 and the mobile communication terminal 510 has been described by an example using a wireless LAN. Bluetooth (registered trademark), IrDA (Infrared Data Association) and other performing methods can also be used for the communication.

As described above, the present invention has been described with reference to the exemplary embodiments, the present invention is not limited to the above-mentioned embodiments. To the composition and details of the present invention, various changes by those of ordinary skill in the art may be made therein without departing from the spirit and scope of the present invention.

This application is based upon and claims the benefit of priority from Japanese Patent Application No. 2008-307333, filed on December 2, 2008, the disclosure of which is incorporated herein in its entirety by reference.

### Industrial Applicability

A communication apparatus according to the present invention can be applied to a game machine, an electronic still camera, a PDA, and a portable laptop computer which connect to the Internet or the like via a mobile communication terminal such as a cellular phone and PHS. A mobile terminal according to the present invention can be applied to a cellular phone and PHS or the like which can be connected to telephone network and a wireless LAN.

## Claims

1. A communication apparatus relaying at least one mobile communication terminal to perform wireless communication with a base station comprising:
an electric field intensity detecting means for detecting an electric field intensity in the wireless communication between the communication apparatus and the mobile communication terminal; and
a receiving means for receiving a signal that includes information on an electric field intensity in the wireless communication between the mobile communication terminal and the base station or a signal that includes information on an electric field intensity in the communication between the mobile communication terminals and information on an electric field intensity in the wireless communication between the mobile communication terminal and the base station.

2. The communication apparatus according to claim 1 further comprising:
a display means for displaying the electric field intensity detected by the electric field intensity detecting means, and the electric intensity including information on the signal received by the receiving means.

3. The communication apparatus according to claim 1 or 2,
wherein the mobile communication terminal is a shingle mobile communication terminal, further comprising a wireless LAN communication means communicating with the single mobile terminal by a wireless LAN.

4. The communication apparatus according to any one of claims 1 to 3, further comprising:
a sleep mode to suppress the power consumption of the internal equipment, and;
wherein the communication apparatus cancelling the sleep mode if there is a change in the electric field intensity of the received signal.

5. The communication apparatus according to any one of claims 1 to 4,
wherein the communication apparatus is any one of a game machine, an electronic still camera, a portable Personal Computer, and a personal mobile terminal.

6. A mobile communication terminal comprising:
an Internet communication means for connecting to the Internet;
a wireless communication means for communicating with an external communication apparatus; and
a routing control means for routing the communication data from the communication apparatus to the Internet.

7. The mobile communication terminal according to claim 6 further comprising:
a sending means for detecting an electric field intensity of radio wave which communicates with a base station, and sending information on the electric field intensity in a beacon to the communication apparatus.

8. The mobile communication terminal according to claim 7, further comprising:
a sleep mode to suppress the power consumption of the internal equipment; and
wherein the mobile communication terminal canceling the sleep mode if the electric field intensity of radio wave in a communication with the base station changes and sending the information on the electric field which the intensity having changed, by including in a beacon, to the communication apparatus

9. A communication system comprising:
the communication apparatus according to any one of claims 1 to 5; and
the mobile communication terminal according to any one of claims 6 to 8, sending and receiving wirelessly with the communication apparatus.

10. The communication system according to claim 9,
wherein the communication apparatus communicating with an external device connected to the Internet via the mobile communication terminal.

11. The communication system according to claim 10,
wherein the communication apparatus is a game machine and the external device is a server for games and/or a game machine.

12. The communication system according to claim 10,
wherein the communication apparatus is an electric still camera and the external device is a server for storing images.

13. The communication system according to claim 10,
wherein the communication apparatus is a portable PC or a personal mobile terminal, and the external device is a server such as for data backups and object for thin client.

14. A display method in a communication apparatus relaying at least one mobile communication terminal to perform wireless communication with a base station comprising:
a detecting step for detecting communication intensity in the wireless communication between the communication apparatus and the mobile communication terminal;
a receiving step for receiving a signal which includes information on an electric field intensity in the wireless communication between the mobile communication terminal and the base station or the signal includes information on an electric field intensity in the communication between the mobile communication terminals and information on an electric field intensity in the wireless communication between the mobile communication terminal and the base station; and
a displaying step for displaying the electric field intensity detected and the electric field intensity in the signal received.

15. The display method in the communication apparatus according to claim 14,
wherein the mobile communication terminal is singular.

16. The display method in the communication apparatus according to claim 14 or 15, further comprising:
wherein the displaying step for displaying the electric field intensity further includes a displaying step for displaying the electric field intensity detected and the electric field intensity in the received signal, by changing the color or the shape.

17. The display method in the communication apparatus according to any one of claims 14 to 16, further comprising:
a battery remaining amount detecting step for detecting a battery remaining amount of the communication apparatus;
a battery remaining amount receiving step for receiving a signal including information on the battery remaining amount of the mobile communication terminal; and
the displaying step further displays the battery remaining amount detected and the battery remaining amount in the received signal.
